(19) Europäisches Patentamt
European Patent Office
Office européen des brevets

(11) **EP 2 367 770 B1**

(12) **EUROPEAN PATENT SPECIFICATION**

(45) Date of publication and mention
of the grant of the patent:
**27.03.2013   Bulletin 2013/13**

(51) Int Cl.:
***C04B 20/10*** *(2006.01)*       ***C04B 40/00*** *(2006.01)*

(21) Application number: **09768081.3**

(22) Date of filing: **14.12.2009**

(86) International application number:
**PCT/EP2009/067017**

(87) International publication number:
**WO 2010/069897 (24.06.2010 Gazette 2010/25)**

(54) **POWDER TO REDUCE SHRINKAGE OF MINERALLY BINDING MATERIALS**

PULVER ZUR MINDERUNG DES SCHWUNDES VON MINERALISCH BINDENDEN MATERIALIEN

POUDRE DESTINEE A REDUIRE LE RETRAIT DE LIANTS MINERAUX

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.12.2008  EP 08172200
18.12.2008  US 138779 P**

(43) Date of publication of application:
**28.09.2011   Bulletin 2011/39**

(73) Proprietor: **Akzo Nobel N.V.
6824 BM  Arnhem (NL)**

(72) Inventors:
• **ZAPF, Alexander
CH-8912 Obfelden (CH)**
• **BÜHLER, Erwin
CH-6204 Sempach (CH)**
• **SCHERER, Thomas
CH-6204 Sempach (CH)**

(74) Representative: **Alferink, Petrus J.T.
Akzo Nobel N.V.
Legal, IP & Compliance
P.O. Box 9300
6800 SB  Arnhem (NL)**

(56) References cited:
**EP-A- 0 308 950     WO-A-96/27565
GB-A- 2 305 428**

**Description**

The invention relates to a powder which is suitable for reducing the shrinkage of minerally binding materials, a process for making the same, its use, as well as a dry mortar formulation containing the powder and a process in which said dry mortar formulation is used as described in claims 1-8.

Many building materials are based on concrete and mortars. They are most typically made by mixing cement, filler, and admixtures with water, followed by applying these aqueous mixtures and allowing them to cure. In order to avoid any crack formation and/or damage, it is essential that these building materials, such as e.g. concrete and mortars, do not change their dimensions or do so only to a very limited extent.

However, due to water loss as a result of e.g. evaporation and water consumption as a result of the chemical reaction of cement with water, the obtained building materials undergo changes in their dimensions. Most typically, this results in a reduction of the dimension, which is called shrinkage, of up to e.g. 0.6 mm/m for concrete and even more for mortars. While the shrinkage can be decreased by optimising the formulation of the concrete or mortar, it cannot be reduced to nil.

In particular when large areas of concrete or mortar need to be produced, it remains a challenge - and often a problem - to avoid crack formation and/or damage caused by the shrinkage.

In order to reduce the shrinkage, it is known in the art that shrinkage-reducing agents can be added to the water/cement mixture.

EP 308 950 A1 discloses the use of alkanediols with terminal OH groups to reduce the shrinkage of building masses containing Portland cement. The alkanediols have the general formula $C_nH_{2n}(OH)_2$, with n being a number between 5 and 10. In WO 96/06058 A1 a liquid cement admixture is described which is capable of inhibiting the shrinkage of a hydraulic cement composition comprising at least one secondary and/or tertiary $C_5$- to $C_{12}$-alkanediol and at least one water-reducing agent. Powders and glycol ethers are not disclosed.

In US 5,622,558 cement admixtures are mentioned which are aqueous compositions. They are capable of inhibiting the drying shrinkage of a cement composition and enhancing the compressive strength of a formation formed from said composition, comprising (A) at least one $C_3$- to $C_{12}$-alkylene glycol and/or water-soluble condensed $C_2$- to $C_4$-alkylene glycol with a degree of condensation of 1 to 20, and (B) silica fume. US 5,571,319 further claims the addition of at least one alkali metal or alkaline earth metal nitrite to this composition. Shrinkage-reducing agents in powder form are not disclosed.

WO 96/27565 A1 describes a liquid cement admixture capable of inhibiting drying shrinkage comprising a mixture of (a) at least one $C_1$- to $C_7$-alkyl or $C_5$- to $C_6$-cycloalkyl ether of a $C_2$- to $C_4$-oxyalkylene adduct and (b) a $C_5$- to $C_{10}$-alkylene diol and wherein the weight ratio of component (a) to component (b) of the mixture is 1:1 to 1:5.

WO 96/27563 A1 discloses a cement composition comprising hydraulic cement and from 0.1 to 5 weight percent (wt.%), based on the weight of the hydraulic cement, of a mixture of (a) at least one $C_3$- to $C_5$-alkyl ether of a $C_2$- to $C_4$-oxyalkylene adduct and (b) a $C_2$- to $C_4$-oxyalkylene glycol. A commercially available liquid product makes use of such a mixture. It consists mainly of dipropylene glycol and [2-(1,1-dimethylethoxy)methylethoxy]-propanol and small amounts of dipropylene glycol di-tert-butyl ether. It is used in cement based screeds to reduce drying shrinkage and the tendency to crack. The components inhibiting drying shrinkage are liquids. Powders containing the same are not disclosed nor commercially available.

All these products are used in liquid form and can be added to the composition containing hydraulic binder when mixing the latter with water. This mode of addition is typical when making e.g. concrete or two-component mortar systems. An important drawback of such so-called liquid shrinkage-reducing agents, however, is that it is not possible to use them to formulate one-component dry mortars, which contain all the ingredients except water. Such one-component dry mortars have the advantage that they can be manufactured in a well-controlled and optimised production environment. Furthermore, logistic aspects are significantly improved, since no water needs to be stored and transported. In order to make them ready for application, they just need to be mixed with the appropriate amount of water.

Some of the compounds which reduce shrinkage do have melting points above room temperature and thus are solids. EP 1 024 120 A1 discloses a composition for reducing the shrinkage of a hydraulic binding agent which contains at least an alkanolamine and optionally a hydroxy and/or ether compound. The shrinkage-reducing agent can also be added to e.g. dry mortars in the form of a powder.

Shrinkage-reducing agents which are solids at room temperature can be hygroscopic and/or difficult to handle in dry mortar manufacture, since they are difficult to dose and/or they tend to form clumps in screw conveyors. Furthermore, their use in solid form is limited to those materials which have a high enough melting point. Liquids or solids with a melting point which is only slightly above room temperature cannot be used to produce dry mortars.

WO 2005/063647 A1 discloses a dry additive for hydraulic binders which comprises a liquid additive disposed in a microporous carrier such as zeolite. Liquid additives used therein can be shrinkage reducers. However, the latter are not further specified.

EP 573 036 A1 discloses the use of 1 to 20 wt.% of polypropylene glycol as shrinkage-reducing additive in water-redispersible polymer powders. JP-A-4114942 discloses powdery zeolite which is impregnated with 5 to 10 wt.% of liquid dry shrinkage-reducing agent, such as an alkylene oxide polymer where a lower alcohol is added. However, compared to known low-molecular materials the efficiency of such polypropylene glycols in reducing shrinkage in hydraulically binding materials is significantly reduced. Furthermore, the loading of polypropylene glycol in the powder is relatively low. As a result, the amount of added carrier material is not insignificant.

WO 2003/022773 A1 discloses hydrated cementitious particulates useful for introducing admixtures and additives into e.g. matrix compositions such as cement, concrete, masonry, mortar. Preferred embodiments include intermixing at least one admixture, water, and hydratable cementitious binder to provide a substantially hydrated hardened mass and comminuting the hardened mass into particulates. Shrinkage-reducing agents can be also used as such admixtures. The disclosed process, however, is complex and requires handling of cement, producing a hardened cement paste mix, and grinding it to particulates. A further disadvantage of such particulates is the fact that when added to a cementitious matrix such as mortar, they can have an adverse influence on cement hydration due to the interaction between the hydrated cement particulate, which most typically still has some reactive sites, and the cement being hydrated. Furthermore, the loading of shrinkage-reducing agent onto the hardened cement particulate is low and the efficiency of the shrinkage reducing agent in these particulates is only about 70% compared to the use of the liquid agent.

EP 675 089 A2 discloses an agent for mineral binder systems for the construction industry which contains at least 60 wt.% of finely divided layered silicate capable of swelling and, optionally, at least one further additive, which can be a shrinkage reducer. The latter are not further specified. JP-A-2005126268 refers to a powdery additive for cement compositions based on hollow particles and a surfactant, which is preferably a shrinkage-reducing agent such as an oxyalkylene compound. JP-A-2007269608 describes a polymer cement grouting material composition comprising Portland cement, an expanding agent, an aggregate, a re-emulsion powder resin, and a shrinkage-reducing agent, wherein the liquid shrinkage-reducing agent is supported on aluminium silicate or aluminium silicate hydrate having a flaky form and an average particle diameter of 5 $\mu$m or smaller or on a calcined product thereof. JP-A-2164754 discloses a cement additive for reducing shrinkage, with a liquid organic shrinkage-reducing agent being absorbed onto inorganic or organic powder having oil-absorbing properties, such as fibrous magnesium oxysulfate or calcium carbonate.

It also was attempted to solve this issue using commercially available products by having highly water-soluble $C_5$- to $C_6$-alkanediols adsorbed onto inorganic carriers with loadings of about 40 to 50%. These alkanediols, however, are categorised as a hazardous material, which is a clear drawback to using the same.

It is noted, however, that the use of such liquids is limited by the kinetics of the release from the carrier. Furthermore, the addition amount needs to be balanced in the light of other criteria such as e.g. the compression strength of the cured and minerally set material.

Although certain shrinkage-reducing agents are available in the powder form and thus can be added to dry mortars, there is a need to provide a powdery additive that enables not only improved reduced shrinkage, but also achieves high early strength. Furthermore, it should be based on non-hazardous materials and it should be possible to have higher contents of active material to optimise logistic aspects such as the transport and storage of mainly active material, as well as to minimise the potentially negative impact of the carrier material in the mortar mixed with water.

Surprisingly, it was found that this objective can be obtained by a powder comprising

a) a carrier material in powdery form which is selected from the group consisting of a water-soluble polymer, a water-insoluble polymer, and an inert inorganic material and
b) at least about 5 wt.%, based on the weight of the final powder, of a compound having the formula (I-a) and at least about 5 wt.%, based on the weight of the final powder, of a compound having the formula (I-b),

$$HO\text{-}(R_2O)_m\text{-}H \quad \text{(I-a)}$$

$$R_{1a}O\text{-}(R_{2a}O)_n\text{-}H \quad \text{(I-b)}$$

wherein $R_{1a}$ is a linear, branched and/or cyclic $C_1$- to $C_6$-alkyl group, $R_2$ is a linear and/or branched $C_2$- to $C_4$-alkylene group, $R_{2a}$ is a linear and/or branched $C_3$-alkylene group, and m and n are integers which may be the same or different and have a value of 1 to 4.

The powder according to the invention has a very good wettability as well as miscibility and disperses and/or redisperses readily upon contact with water within a few seconds, at most through light stirring. It is highly advantageous that the powders according to the invention have no safety hazard due to the low toxicity of the mixture. A mixture containing compounds having the formulae (I-a) and (I-b) is capable of effectively reducing the shrinkage of minerally binding materials. Thus, the mixture, which is a liquid at room temperature, is classified as a liquid shrinkage-reducing agent and the powder according to the invention is classified as a powdery shrinkage-reducing agent.

It was unexpected and surprising to find that the powder according the invention increases the early strength of the mortar containing the same. This leads to significant increased abrasion resistance in comparison to when the mixture is used as a liquid shrinkage-reducing material without the carrier material or when commercial powders which reduce the shrinkage of minerally binding materials are employed. Furthermore, it was surprisingly found that the powders according to the invention have no adverse effect in particular on cement hydration, on defoaming, or on the self-levelling properties of self-levelling floor screeds - characteristics which are highly sensitive to adjust. Additionally, the powders according to the invention are free-flowing even at high loadings of compounds having the formulae (I-a) and (I-b) and show no clump formation when stored as such, when formulated with other additives, or when they are part of a dry mortar formulation.

It also was surprising to find that basically each inert inorganic carrier material in powder form can be used, irrespective of its BET-surface, measured according to ISO 5794-1, Annex D. Furthermore, it was unexpected to find that even mixtures containing compounds having e.g. the formula (I-b), which have a water solubility of e.g. below 250 g/l, can be used. Thus, it was a surprise to find that even a 5 : 1 : 4 mixture of dipropylene glycol, dipropylene glycol di-tert-butyl ether, and [2-(1,1-dimethylethoxy)methylethoxy]-propanol, the last having a water solubility of 165.3 g/l, measured at 20°C according to 92/69/EEC - Method A6, was giving the same reduction in shrinkage, irrespective of whether it was adsorbed onto a carrier or added as a liquid. It is concluded from this result that all of the adsorbed mixture, including the compounds having the formulae (I-a) and (I-b), desorb from the carrier fast enough to act effectively as shrinkage-reducing agent, although the skilled person would have expected materials with a limited water solubility to rather adhere to the inorganic carrier material due to their hydrophobic character and thus not to desorb or only to desorb to a limited extent. Thus, the powders according to the invention are basically as effective in reducing shrinkage as when using the liquid mixture alone.

The invention also relates to a process to make the powder. In one embodiment, the mixture containing compounds having the formulae (I-a) and (I-b) is adsorbed onto the carrier material. In another embodiment, in particular when the carrier material is a water-soluble and/or water-insoluble polymer, the mixture is mixed in water with the dissolved or dispersed water-soluble and/or water-insoluble polymer and subsequently dried. If desired, the powder obtained may be mixed further with other additives. Thus, the powder according to the invention can be made without a complex multi-step process.

Using a water-soluble and/or water-insoluble polymer as the carrier material often has the advantage that two or more effects can be achieved with one single powder: in addition to the shrinkage-reducing effect from the compounds having the formulae (I-a) and (I-b), there is also the effect which is delivered by the water-soluble and/or water-insoluble polymer, which in many cases contributes to the binding properties.

The powder according to the invention can be used in minerally binding materials to reduce their shrinkage. The building material is preferably a building compound, a concrete and/or mortar.

Since the product of the invention is a powder, dry mortar formulations can be obtained which when mixed with water and applied onto a substrate have superior reduced shrinkage properties. Additionally, it is possible to work the powder into a dry mortar formulation already at the factory, e.g. a dry mortar manufacturer's, under well-controlled conditions by dry-mixing it with the other mortar ingredients. This makes possible exact dosing and a homogeneous distribution and makes preparation particularly easy and economical. No water needs to be transported and stored, making the mixture desensitised in respect of freeze-thaw and biological attack. The dry mortar formulation can then be mixed with the appropriate amount of water on the building site just shortly before its application. This brings many advantages with it, such as for instance easy handling and/or simplified logistics.

The invention finally provides a process to reduce the shrinkage of minerally binding materials, wherein the dry mortar formulation containing the powder according to the invention is mixed with water and applied onto a substrate or is cast in a mould and allowed to dry. Thus, cured mortar formulations having a clearly reduced shrinkage can be obtained easily and economically.

$R_2$ in formula (I-a) is a linear and/or branched $C_2$- to $C_4$-alkylene group, with the term "alkylene" in the context of the present invention representing the divalent radical of the respective alkane. Preferably, $R_2$ is a linear and/or branched $C_2$-to $C_3$-alkylene group, with $R_2$ most preferably being a $C_3$-alkylene group, in particular a branched $C_3$-alkylene group. Non-limiting examples include the divalent radicals of ethane, n-propane, isopropane, n-butane, isobutane and/or tertiary butane. Preferred are divalent radicals of ethane, n-propane and/or isopropane, with the divalent radicals of ethane and isopropane being most preferred.

$R_{1a}$ in formula (I-b) is a linear, branched and/or cyclic $C_1$- to $C_6$-alkyl group, preferably a $C_3$- to $C_5$-alkyl group, in particular a $C_4$-alkyl group and/or a branched alkyl group. Non-limiting examples include methyl, ethyl, n-propyl, isopropyl, n-butyl, isobutyl, tertiary butyl, n-pentyl, isopentyl, cyclopentyl and/or cyclohexyl groups. Preference is given to n-propyl, isopropyl, n-butyl, isobutyl, tertiary butyl, n-pentyl, isopentyl groups, with isopropyl, isobutyl, and tertiary butyl groups being most preferred.

$R_{2a}$ in formula (I-b) is a $C_3$-alkylene group, most preferably a branched $C_3$-alkylene group. Preferred are the divalent radicals of n-propane and/or isopropane.

m and n are integers which may be the same or different and have a value of 1 to 4, preferably 2 to 4, in particular being 2 or 3.

The mixture containing compounds having the formulae (I-a) and (I-b) preferably contains at least about 10 wt.%, in particular at least about 20 wt.%, and most preferably at least about 35 wt.% of at least one compound having the formula (I-a) or (I-b).

In a preferred embodiment, at least about 60 wt.%, in particular at least about 80 wt.% is in the form of a mixture containing compounds having the formulae (I-a) and/or (I-b). Most preferred is a mixture of compounds of formulae (I-a) and (I-b) as main shrinkage-reducing agents. Furthermore, the mixture can also contain up to 40 wt.%, preferably up to 20 wt.%, of the diether of the compound having the formula (I-a) and/or of any other compound known in the art which acts as shrinkage-reducing agent in minerally binding materials.

Non-limiting examples of compounds having the formulae (I-a) and (I-b) include diethylene glycol, triethylene glycol, dipropylene glycol, tripropylene glycol, and their monoethers, with the organic portion of the ether group being preferably a n-propyl, isopropyl, n-butyl, isobutyl, tertiary butyl, n-pentyl, isopentyl, cyclopentyl or cyclohexyl group.

Particularly preferred are compounds having the formulae (I-a) and/or (I-b) which are selected from the group consisting of diethylene glycol, triethylene glycol, dipropylene glycol, tripropylene glycol, and their monoethers, with the organic portion of the ether group being an i-propyl and/or a t-butyl group.

In a preferred embodiment, the mixture of compounds (I-a) and (I-b) has a water solubility of less than about 700 g/l, preferably less than about 500 g/l, in particular less than about 250 g/l, measured at 20°C.

The carrier material is a powder and is selected from a water-soluble polymer, a water-insoluble polymer, and an inert inorganic material. The water-soluble polymer and the water-insoluble polymer are organic polymers.

In the context of this invention, powder means that the powder according to the invention possesses free-flowing properties, which in most cases can easily be determined visually by pouring the powder from e.g. a container onto a flat surface. However, for more critical cases, or if an exact rating is required, it can be determined in accordance with ISO 4342 by using the pourability tester according to Dr. Pfrengle (sold e.g. by Karg-Industrietechnik). In such a case, a given amount of powder is poured through a defined orifice onto a slightly roughened surface. By measuring the height of the obtained cone formed by the powder, the pouring angle can be determined according to a reference list. The lower the pouring angle, expressed in degrees, the better the pourability of the powder, and therefore the better the free-flowing characteristics of the powder. The free-flowing powder according to the invention typically has a pouring angle of about 70° or less, preferably of about 60° or less, and in particular of about 50° or less.

The water-soluble and/or water-insoluble polymer may be a synthetic polymer but it can also be a biopolymer such as a polysaccharide or a peptide, each of which may be of natural origin or may have been prepared. The water-soluble and/or water-insoluble polymer may be synthetically modified. These polymers as such are solids at room temperature and preferably have a high molecular weight. When several water-soluble and/or water-insoluble polymers are used, use can also be made of a combination of one or more natural compounds with one or more synthetically prepared compounds. Often it is advantageous when the water-insoluble polymers are water-dispersible and/or redispersible in water. The water-soluble and/or water-insoluble polymers typically have a bulk density of about 200 g/l or higher, in particular of about 400 g/l and higher. Hollow solid polymer particles are less preferred.

Biopolymers and their derivatives preferably usable as carrier material are e.g. cold water-soluble polysaccharides and polysaccharide ethers, such as for instance cellulose ethers, starch ethers (amylose and/or amylopectin and/or their derivatives), guar ethers, dextrins and/or alginates. Also synthetic polysaccharides such as anionic, nonionic or cationic heteropolysaccharides can be used, in particular xanthan gum, welan gum and/or diutan gum. The polysaccharides can be, but do not have to be, chemically modified, for instance with carboxymethyl, carboxyethyl, hydroxyethyl, hydroxypropyl, methyl, ethyl, propyl, sulfate, phosphate and/or long-chain alkyl groups. Preferred usable peptides and/or proteins are for instance gelatine, casein and/or soy protein. Quite especially preferred biopolymers are dextrins, starches, starch ethers, casein, soy protein, gelatine, hydroxyalkyl-cellulose and/or alkyl-hydroxyalkyl-cellulose, wherein the alkyl group may be the same or different and preferably is a $C_1$- to $C_6$-group, in particular a methyl, ethyl, n-propyl- and/or i-propyl group.

Synthetic, water-soluble organic polymers preferred as carrier material can consist of one or several polymers, for instance one or more polyvinyl pyrrolidones and/or polyvinyl acetals with a molecular weight of 2,000 to 400,000, fully or partially saponified polyvinyl alcohols and their derivatives, which can be modified for instance with amino groups, carboxylic acid groups and/or alkyl groups, with a degree of hydrolysis of preferably about 70 to 100 mol.%, in particular of about 80 to 98 mol.%, and a Höppler viscosity in 4% aqueous solution of preferably 1 to 100 mPas, in particular of about 3 to 50 mPas (measured at 20°C in accordance with DIN 53015), as well as melamine formaldehyde sulfonates, naphthalene formaldehyde sulfonates, polymerisates of propylene oxide and/or ethylene oxide, including their copolymerisates and block copolymerisates, styrene-maleic acid and/or vinyl ether-maleic acid copolymerisates. Quite especially preferred are synthetic organic polymers, in particular partially saponified, optionally modified, polyvinyl alcohols with a degree of hydrolysis of 80 to 98 mol.% and a Höppler viscosity as 4% aqueous solution of 1 to 50 mPas and/or polyvinyl pyrrolidone.

Synthetic, water-insoluble polymers are most typically water-dispersible and/or redispersible in water. Preferred water-insoluble polymers as carrier material are based on emulsion, suspension and/or dispersion polymers which when dispersed in water are typically film-forming at room temperature. Most typically, they are based on vinyl acetate, ethylene-vinyl acetate, ethylene-vinyl acetate-vinyl versatate, ethylene-vinyl acetate-(meth)acrylate, ethylene-vinyl acetate-vinyl chloride, vinyl acetate-vinyl versatate, vinyl acetate-vinyl versatate-(meth)-acrylate, vinyl versatate-(meth)acrylate, pure (meth)acrylate, styrene-acrylate and/or styrene-butadiene, wherein vinyl versatate preferably is a $C_4$- to $C_{12}$-vinyl ester, and the polymerisates can contain about 0 - 50 wt.%, in particular about 0 - 30 wt.%, and quite especially preferably about 0 - 10 wt.% of further monomers, in particular monomers with functional groups.

When an inorganic carrier material is used, this carrier material needs to be an inert inorganic carrier material. In the context of this invention, inert means that this material does not undergo any reaction with any of the compounds having the formulae (I-a) and (I-b), e.g. the shrinkage-reducing agent, or water. By reaction is also meant that the powder does not swell upon contact with water and/or alkaline cement water. Hence, the inert inorganic carrier material, if taken alone, would be classified as filler and/or an aggregate and does not give any additional functionality such as water retention, hydrophobicity, defoaming, etc. Thus, it is not based on cement and/or hydrated cement.

Non-limiting examples of inert inorganic carrier materials are aluminosilicate, silicon oxide, silicon dioxide, aluminium silicon oxide, calcium silicate hydrate, aluminium silicate, magnesium silicate, magnesium silicate hydrate, magnesium aluminium silicate hydrate, mixtures of silicic acid anhydrite and kaolinite, aluminium silicate hydrate, calcium aluminium silicate, calcium silicate hydrate, aluminium iron magnesium silicate, calcium carbonate, calcium magnesium carbonate, calcium metasilicate, anticaking agents, particulate titanium dioxide, expanded perlite, cellite, cabosil, circosil, aerosil, eurocell, fillite, promaxon, china clay, dolomite, limestone powder, chalks, layered silicates and/or precipitated silicas. Preferred are silicate, silicon dioxide, silica fume, fumed silica, carbonates, kaolin and/or china clay, and most preferred are silicate, silicon dioxide and/or fumed silica. Less preferred are zeolites. Swelling layered phyllosilicates and sheet silicates such as bentonite, montmorillonite, hectorite, saponite, beidellite and/or sauconite do no fall within the context of this invention.

The physical form of the inorganic carrier material can be e.g. a spherical, platelet, rod and/or lamellae-like structure, with spherical forms often being preferred. However, it is helpful if the inorganic carrier material shows a good pourability in order to allow good processing of the material. Most typically, the powder according to the invention shows the same pourability as the carrier alone or a similar one.

The mean diameter of the inorganic carrier material in powder form, measured e.g. by light scattering such as e.g. ISO 13320-1, typically is less than about 1,000 $\mu$m and preferably less than about 500 $\mu$m, in particular about 200 $\mu$m or less, and most preferably about 100 $\mu$m or less. It can be as small as e.g. 1 $\mu$m or lower, but in general, due to the toxicity associated with the respiration of small dust particles and for handling reasons, it is preferred that the mean diameter of the inorganic carrier material is at least about 5 $\mu$m or higher, preferably about 10 $\mu$m or higher, and in particular about 20 $\mu$m or higher.

Basically, each inert inorganic carrier material in powder form can be used as carrier material, irrespective of its BET-surface, measured according to ISO 5794-1, Annex D. However, the loading of the mixture is lower when the BET surface of the carrier is lower. Thus, the BET surface can be as low as e.g. 5 $m^2$/g or lower, or as high as 500 $m^2$/g or higher. Often it is an advantage, however, to have powders with high amounts of adsorbed mixture and thus of the compounds having the formulae (I-a) and (I-b). Therefore, it is typically preferred to have inorganic carrier materials with a BET-surface of at least 50 $m^2$/g, in particular of at least 100 $m^2$/g, and most preferably of at least 250 $m^2$/g.

Thus, the weight ratio of the carrier material to the sum of the compounds having the formulae (I-a) and (I-b) for carrier materials having a BET surface of at least 50 $m^2$/g typically is between about 60 : 40 and about 5 : 95, preferably between about 50 : 50 and about 10 : 90, in particular between about 40 : 60 and about 20 : 80. For carrier materials preferably being of an inorganic material, with a BET surface of less than 50 $m^2$/g, the ratio typically is between about 90 : 10 and about 40 : 60, preferably between about 80 : 20 and about 50 : 50, in particular between about 75 : 25 and about 55 : 45.

The powder according to the invention can be obtained by various processes. One preferred process is to adsorb the mixture containing compounds having the formulae (I-a) and (I-b) onto the carrier. This process is suitable for all types of carrier materials, with it being particularly preferred when inorganic carriers as well as water-soluble carriers are used. The types of mixers used for this process are well known to the person skilled in the art. Preferred mixers are powder mixers equipped with nozzles to spray the liquid mixture onto the carrier. Non-limiting examples are e.g. ploughshare mixers and/or granulators.

The process can be carried out as a batch, semi-continuous or continuous process. The preferred temperature to carry out this process is typically room temperature or slightly above. However, the temperature of the mixture might need to be adjusted to obtain the ideal viscosity for spraying it into the mixing chamber, followed by adsorption onto the carrier.

Another preferred process suitable for carrier materials which consist of a water-soluble and/or insoluble polymer is a process wherein the mixture containing compounds having the formulae (I-a) and (I-b) is mixed in water with the dissolved or dispersed water-soluble and/or water-insoluble polymer and subsequently dried. The drying can take place by means of every suitable process. Preferred are spray drying, freeze drying, fluidised bed drying, drum drying, granulation, such as for instance fluid bed granulation and/or rapid drying, with spray drying being especially preferred. Spray drying can take place for instance by means of a spraying wheel or a one-component or multicomponent nozzle. If necessary, the mixture to be dried can still be diluted with water, in order to achieve a suitable viscosity for the drying. The drying temperature in principle has no real limits. However, because of safety-related considerations, the temperature of the inlet gas should not, as a rule, exceed about 225°C, in particular about 200°C. In order to attain sufficiently efficient drying, temperatures of about 110°C or higher, in particular of about 120°C or higher, are often preferred.

Irrespective of the used process, the obtained powder can be further mixed with additives, which are preferably in the form of solids, particularly in the form of a free-flowing and/or pourable powder.

According to the invention, the solid and in particular the powder according to the invention can contain further additives. As to the nature of the further additives no real restrictions are imposed, as long as they do not enter into any undesired reactions. Often they have an important function in building materials such as mortars and/or concrete. If the additives are themselves powdery, they can for instance be easily added to the powder. If they are liquid, the addition preferably takes place before and/or during the drying or adsorption step of the preparation of the powder according to the invention. Particularly preferred additives are wetting agents and hydrophobising agents such as siloxanes, fatty acids and/or fatty acid esters, as well as rheology control additives such as superplasticisers and/or thickeners and additives to reduce efflorescence.

The amount of these additives added to the powder according to the invention can vary within a broad range. For surface-active materials for instance the proportion of these additives can be very small and be in the range of about 0.01 wt.% or higher, in particular about 0.1 wt.% and higher, but as a rule it will not exceed about 10 wt.%, in particular about 5 wt.%, based on the sum of the weights of the compounds having the formula (I-a) and (I-b) and the carrier material.

While it is possible to combine these additives with the powder according to the invention, they can also be used - either instead of or in addition to combining them with the powder - as formulation aids of the mortar and/or concrete formulations, in particular of the dry mortar formulation.

The powder according to the invention as well as the powder obtained by the claimed processes is used in minerally binding materials to reduce shrinkage of the latter. Preferred minerally binding materials are building compounds, concretes and/or mortars, in particular dry mortars, fresh mortars, pasty mortar, one- or two-component mortar, concrete, shotcrete, self-compacting concrete, gypsum mortars, plasters, renders, shotplasters, gypsum plasters, gypsum/cement plasters, cement/lime plasters, flow bed mortars, repair mortars, tile grouts, floor screeds, self-levelling floor screeds, levelling compounds, crack fillers, ceramic tile adhesives and/or mortars for thermal insulation.

With the dry mortar formulations according to the invention, building compounds with reduced shrinkage can be manufactured. The dry mortar formulations contain at least one powder according to the invention. By building compounds the skilled person means in particular mortar, concrete, plasters, coating systems, and construction adhesives.

The dry mortar formulation as a rule contains one or more mineral binders. In the context of the invention, mineral binders are binders which are typically solids and in particular consist of at least a) a hydraulically setting binder, in particular cements, activated blast furnace slags and/or silico-calcareous fly ash, b) a latent hydraulic binder, such as in particular pozzolanes and/or metakaolin, which reacts hydraulically in combination with a calcium source such as calcium hydroxide and/or cement, and/or c) a non-hydraulic binder which reacts under the influence of air and water, in particular calcium hydroxide, calcium oxide, quicklime, hydrated lime, magnesia cements, water glass and/or gypsum, by which is meant in this invention in particular calcium sulfate in the form of $\alpha$- and/or $\beta$-semihydrate and/or anhydrite of form I, II and/or III.

Preferred cements are in particular Portland cement, for instance in accordance with EN 197-1 CEM I, II, III, IV, and V, and/or calcium phosphate cement and/or aluminous cement such as calcium aluminate cement and/or calcium sulfoaluminate cement.

Preferred latent hydraulic binders or pozzolanes are metakaolin, burnt shale, diatomaceous earth, moler, rice husk ash, air cooled slag, calcium metasilicate and/or vulcanic slag, vulcanic tuff, trass, fly ash, silica fume, microsilica, blastfurnace slag, and/or silica dust.

Preferred non-hydraulic binders are gypsum, by which is meant in this invention in particular calcium sulfate in the form of $\alpha$- and/or $\beta$-semihydrate and/or anhydrite of form I, II and/or III, calcium hydroxide, calcium oxide, lime such as quicklime and/or hydrated lime, magnesia cements and/or water glass.

The preferred minerally binding material is a hydraulically binding material, in particular Portland cement, or a mixture of Portland cement, calcium aluminate cement, and gypsum.

The dry mortar formulation contains the powder according to the invention typically in an amount from about 0.1 wt.% to 3.0 wt.%, preferably from about 0.2 wt.% to 2.5 wt.%, in particular from about 0.3 wt.% to 2.0 wt.%, and most preferably from about 0.5 wt.% to 1.5 wt.%, based on the dry weight of the formulation. The types and the amounts of the other ingredients of the dry mortar depend on the specific application area of the mortar formulation and are known to the skilled person.

The dry mortar formulations according to the invention can be formulated for instance as coating or composite mortar, mixtures to make plaster boards, thermal insulation mortar, sealing compounds, gypsum screed, gypsum and/or lime and/or cement plasters, repair mortar, joint adhesives, tile adhesives, in particular ceramic tile adhesives, stucco work and/or moulding plaster compositions, plywood mortar, mortar for mineral bonding agents, cement primers, concrete coating mortar, powder coatings, parquet adhesives, skim coats, levelling compounds, in particular self-levelling compounds, and/or screeds. Preferably, they are used in smoothing mortar, finish mortar, joint filler, joint sealer, levelling compounds, in particular self-levelling compounds, and/or screeds.

One preferred process to manufacture the dry mortar formulation according to the invention is to dry-mix the powder according to the invention with the other mortar ingredients. Such mixing processes are known to the skilled person.

Alternatively, it also is possible for the powder to be added as a separate component directly before, during and/or after mixing the dry mortar formulation with water. In another embodiment, the solid is first dissolved, dispersed and/or redispersed in water, e.g. in the mixing water, and mixed with the dry mortar formulation.

In the claimed process to use dry mortar formulations, these are mixed with water and applied onto a substrate or cast in a mould, followed by drying.

Non-limiting examples of substrates are mineral building materials, bricks, component parts and/or constructions, mineral construction materials, such as lime sandstone, granite, lime, gypsum, marble, perlite, porous and non-porous tiles, natural stone, screed, clay articles, but also artificial stone, masonries, facades, roofs, bricks and/or terracotta.

The invention is further elucidated with reference to the following examples. Unless indicated otherwise, the experiments were carried out at a temperature of 23°C and a relative humidity of 50%.

Example 1: Preparation of powder P-1

In a Loedige ploughshare mixer L50 with liquid addition nozzles, a mixture of 8.15 kg dipropylene glycol (CAS No. 025265-71-8), a compound of formula (I-a), 1.63 kg dipropylene glycol di-tert-butyl ether (CAS No. 069506-59-8), and 6.52 kg of [2-(1.1-dimethylethoxy)methylethoxy]-propanol (CAS No. 132739-31-2), a compound of formula (I-b) and having a water solubility at 20°C of 165.3 g/l, was sprayed at room temperature with continuous mixing onto the carrier material, the latter being 7 kg of Sipernat 50 (ex-Evonik Industries; a chemically obtained silicon dioxide having a BET surface of 475 g/m$^2$, a pouring angle according to ISO 4342 of about 40°, and a mean particle size of 40 $\mu$m, measured following ISO 13320-1). The resulting mixture was further mixed for another 10 minutes to result in a homogeneous free-flowing powder having about the same pouring angle as the carrier material itself.

Example 2: Preparation of powder P-2

In a Loedige ploughshare mixer L50 with liquid addition nozzles, a mixture of 2.15 kg dipropylene glycol, 0.43 kg dipropylene glycol di-tert-butyl ether, and 1.72 kg of [2-(1.1-dimethylethoxylmethy)ethoxy]-propanol was sprayed at room temperature with continuous mixing onto 7 kg of a commercially available calcium carbonate having a BET surface of about 10 g/m$^2$ and a mean particle size of 20 $\mu$m. The resulting mixture was further mixed for another 10 minutes to result in a homogeneous free-flowing powder.

Example 3: Preparation of powder P-3

75 g dipropylene glycol, 15 g dipropylene glycol di-tert-butyl ether, and 60 g of [2-(1.1-dimethylethoxy)methylethoxy]-propanol were mixed with 1,400 g of a 25 wt.% aqueous solution of a polyvinyl alcohol with a degree of hydrolysis of 88 mol.% and a Höppler viscosity as 4% aqueous solution of 4 mPas. The mixture was dried without further additives using conventional spray drying with an inlet temperature of 125°C to a white, free-flowing, and readily water-soluble powder in good yield, in which process no significant fouling occurred in the spraying tower.

Example 4 (Reference): Powder P-4

Powder P-4 is Metolat P-871, a commercially available, state of the art powder to reduce shrinkage in cement-based systems from Münzing Chemie, Germany, consisting of neopentyl glycol on amorphous silicon dioxide.

Example 5 (Reference): Liquid additive L-1

Liquid additive L-1 is Eclipse Floor, a commercially available liquid shrinkage-reducing agent from W. R. Grace consisting of a mixture of dipropylene glycol, dipropylene glycol di-tert-butyl ether, and [2-(1.1-dimethylethoxy)methylethoxy]-propanol.

Example 6: Preparation of dry mortar master batch DMMB-1

5 kg of a dry mix formulation DMMB-1, consisting of 320 parts by weight of an ordinary Portland cement CEM I 52.5, 5 parts by weight of hydrated lime, 220 parts by weight of a quartz sand 0.1-0.6 mm, 277.5 parts by weight of a quartz sand 0.1-0.3 mm, 150 parts by weight of a natural calcium carbonate (Omyacarb 10 BG), 3 parts by weight of sodium carbonate, 1.2 parts by weight of a commercially available powder defoamer (Agitan P823), 0.6 parts by weight of a commercially available cellulose ether, 1.2 parts by weight of setting control additives, 2 parts by weight of a commercially available redispersible polymer powder of an ethylene-vinyl acetate copolymerisate (Elotex FL2211), and 1.5 parts by weight of a commercially available plasticiser (Elotex FLOW8532) were prepared by mixing the components in a 10 l vessel with a FESTO stirrer until a homogeneous dry mortar master batch was obtained.

Example 7: Preparation of dry mortar master batch DMMB-2

Dry mortar master batch DMMB-2 was prepared in analogous manner to DMMB-1, but with use being made of 400 parts by weight of an ordinary Portland cement CEM I 42.5R and 600 parts by weight of quartz sand CEN EN 196-1.

Preparation of mortar mixes:

The dry mortar master batches DMMB-1 and DMMB-2 were each mixed with the powders according to Examples 1, 2, and 4. The amount of powder was chosen such that each mortar was provided with the same amount of active liquid as occurred for comparative liquid additive L-1, which was 0.8 wt.%, based on the total weight of the final dry mortar formulation in the dry and uncured form. Hence, for powders P-1 and P-2 the amount of actives refers to the adsorbed liquids that comprise compounds of formulae (I-a) and (I-b), which act as shrinkage-reducing agent. In the case of powder P-4, the amount of liquid was calculated on the basis of the ash content of powder P-4.

100 parts by weight of the dry mixtures were added slowly to water while stirring. Where liquid additive L-1 was used, it was added to the mixing water prior to adding the dry mortar master batches. The amount of added water is indicated in the texts above the tables and is referenced to 100 parts by weight of the sum of the dry mortar master batch and the added powder or liquid additive. This mixture was stirred for one minute with a 60 mm propeller stirrer with a speed of 800 rpm. After a maturing time of 3 minutes the mortar was again stirred by hand for 15 seconds and applied.

Example 8: Determination of shrinkage, following DIN 52450

After three minutes of maturing time, the mortar batches mixed with water were poured into 4x4x16 cm prisms, which were covered afterwards with a plastic foil. After 24 hours, the specimens were removed and the length measurement at to was taken. Afterwards, the storage of the prisms at ambient conditions (23°C, 50% relative humidity) was started. The length change was measured with a Schwindprüfer R14 device from Proceq SA, Zürich after 1, 3, 7, 14, and 28 days and recorded in mm/m. The shrinkage, which was measured as a macroscopic dimension change which includes drying as well as chemical shrinkage, was calculated according to the following equation:

$$\text{Shrinkage [mm/m]} = (\text{length } (t_0) \text{ [mm]} - \text{length } (t_n) \text{ [mm]})/\text{length of prism [m]}$$

Table 1: Shrinkage of mortars based on dry mortar master batch DMMB-1 with different additives and with 21 wt.% of mixing water. The results were measured after 1, 3, 7, 14, and 28 days.

| Exp. No. | 1.1 (Ref.) | 1.2 (Ref.) | 1.3 | 1.4 | 1.5 (Ref.) |
|---|---|---|---|---|---|
| *Mortar formulation, in [wt. %]* | | | | | |
| DMMB-1 | 100 | 99.2 | 98.86 | 97.34 | 98.67 |
| L-1 (Ref.) | | 0.8 | | | |
| p-1[a] | | | 1.14 | | |
| P-2[a] | | | | 2.66 | |
| P-4 (Ref.) [a] | | | | | 1.33 |

(continued)

| Measured shrinkage vs. time, in [mm/m] | | | | |
|---|---|---|---|---|
| 1 day | 0.075 | -0.006 | 0.006 | 0.038 | 0.019 |
| 3 days | 0.319 | 0.119 | 0.131 | 0.131 | 0.319 |
| 7 days | 0.725 | 0.344 | 0.419 | 0.381 | 0.469 |
| 14 days | 1.206 | 0.625 | 0.675 | 0.644 | 0.788 |
| 28 days | 1.663 | 0.888 | 0.919 | 0.938 | 1.169 |
| a) The amounts of added powder were adjusted to the same amount of active material as used in Exp. No. 1.2 (for details see text). | | | | | |

The results in Table 1 show that with powder P-1, which is according to the invention, the shrinkage after 28 days is reduced by 46.7% (Exp. No. 1.3) and with powder P-2, which is also according to the invention, it is reduced by 43.6% (Exp. No. 1.4), relative to Reference Exp. No. 1.1. This is comparable to the reduction provided by the liquid additive L-1 used in Exp. 1.2 (reduction by 46.6%). This indicates that the powders according to the invention are basically as effective as the commercial liquid shrinkage-reducing agent. However, when the commercially available powder sample P-4 is used, the reduction is only 29.7 % (Exp. No. 1.5), which is significantly lower. All relative reductions are computed against Reference Exp. No. 1.1, which does not contain any shrinkage-reducing agent.

Table 2: Shrinkage of mortars based on dry mortar master batch DMMB-2 with different additives and with 16 wt.% of mixing water. The results were obtained after 1, 3, 7, 14, and 28 days.

| Exp. No. | 2.1 (Ref.) | 2.2 (Ref.) | 2.3 | 2.4 (Ref.) |
|---|---|---|---|---|
| Mortar formulation, in [wt. %] | | | | |
| DMMB-2 | 100 | 99.2 | 98.86 | 98.67 |
| L-1 (Ref.) | | 0.8 | | |
| P-1[a] | | | 1.14 | |
| P-4 (Ref.) [a] | | | | 1.33 |
| Measured shrinkage vs. time, in [mm/m] | | | | |
| 1 day | 0.194 | 0.031 | 0.063 | 0.144 |
| 3 days | 0.419 | 0.144 | 0.188 | 0.313 |
| 7 days | 0.713 | 0.331 | 0.375 | 0.575 |
| 14 days | 0.863 | 0.438 | 0.481 | 0.725 |
| 28 days | 1.094 | 0.594 | 0.656 | 0.938 |
| a) The amounts of added powder were adjusted to the same amount of active material as used in Exp. No. 2.2 (for details see text). | | | | |

A similar outcome holds for the results presented in Table 2. Although the reduction of the shrinkage after 28 days with powder P-1, which is according to the invention, in Exp. No. 2.3 (reduction by 40%) is not as high as with the respective liquid additive L-1 used in Exp. 2.2 (reduction by 43.7%), it is of the same order of magnitude. This strong decrease obtained when using powder P-1 needs to be seen in relation to the results obtained in Exp. No. 2.4 using the commercially available powder P-4, which results only in a decrease of 14.3%! All relative reductions are computed against Reference Exp. No. 2.1, which does not contain any shrinkage-reducing agent.

Example 9: Determination of abrasion resistance

After a maturing time of three minutes, the mortar batches mixed with water were poured onto a PVC foil into a disc-like ring with a diameter of 125 mm, with a polyethylene tube with a diameter of 8 mm being placed in the centre of the ring. After 1 day of storage under ambient conditions at 23°C and 50% relative humidity the specimens were taken out of the ring and further stored under the same conditions for a defined period of 1 day. Before starting the abrasion resistance test, the specimens were weighed.

The abrasion resistance of the specimens was tested with a Taber Abrasion Apparatus 532, Model 5130. The test specimens were placed on the abrasion tester and a 1,000 g load was placed on top of the abrader wheel and allowed to spin for a total of 100 cycles. The specimens were weighed again after the test was finished. The abrasion resistance is recorded in grams as weight loss of the sample by measuring the weight before and after testing.

Table 3: Abrasion resistance of the mortars based on dry mortar master batch DMMB-1 with different additives and 21 wt.% of mixing water. The samples were measured after a total of 2 days storage.

| Exp. No. | 3.1 (Ref.) | 3.2 (Ref.) | 3.3 | 3.4 (Ref.) |
|---|---|---|---|---|
| Mortar formulation, in [wt. %] | | | | |
| DMMB-1 | 100 | 99.2 | 98.86 | 98.67 |
| L-1 (Ref.) | | 0.8 | | |
| P-1[a)] | | | 1.14 | |
| P-4 (Ref.) [a)] | | | | 1.33 |
| Measured abrasion, in [g] | | | | |
| 2 days | 2.32 | 1.88 | 0.74 | 3.54 |
| a) The amounts of added powder were adjusted to the same amount of active material as used in Exp. No. 3.2 (for details see text). | | | | |

The results of Table 3 demonstrate that Powder P-1, which is according to the invention, also increases the early strength of the mortar containing the same. This effect is surprising and could not have been foreseen. Hence, the abrasion is reduced by 68.1 % (Exp. No. 3.3), while the reduction with liquid additive L-1 is only 19.0% (Exp. No. 3.2). However, when commercial powder P-4 is used, the abrasion resistance is decreased significantly, leading to an increase of the abrasion by 52.6% (Exp. No. 3.4)! All relative reductions are computed against Reference Exp. No. 3.1, which does not contain any shrinkage-reducing agent.

## Claims

1. Powder which is suitable for reducing the shrinkage of minerally binding materials, **characterised in that** it comprises

   a) a carrier material in powdery form and selected from the group consisting of a water-soluble polymer, a water-insoluble polymer and an inert inorganic material, wherein the inert inorganic material is selected from the group consisting of silicate, silicon dioxide, silica fume, fumed silica, carbonates, kaolin and/or china clay, and
   b) at least about 5 wt.%, based on the weight of the final powder, of a compound having the formula (I-a) and at least about 5 wt.%, based on the weight of the final powder, of a compound having the formula (I-b),

   $$HO\text{-}(R_2O)_m\text{-}H \qquad (I\text{-}a)$$

   $$R_{1a}\text{-}(R_{2a}O)_n\text{-}H \qquad (I\text{-}b)$$

   wherein $R_{1a}$ is a linear, branched and/or cyclic $C_1$- to $C_6$-alkyl group, $R_2$ is a linear and/or branched $C_2$- to $C_4$-alkylene group, $R_{2a}$ is a linear and/or branched $C_3$-alkylene group, and m and n are integers having independently from each other a value of 1 to 4.

2. Powder according to claim 1, **characterised in that** at least one compound having the formula (I-a) or (I-b) is selected from the group consisting of diethylene glycol, triethylene glycol, dipropylene glycol, tripropylene glycol and their monoethers.

3. Process to make a powder according to claim 1 or 2, **characterised in that**

a) either a mixture of compounds (I-a) and (I-b) is adsorbed onto the carrier material in the form of a powder,
b) or, when the carrier material is a water-soluble and/or water-insoluble polymer, said mixture is mixed with said water-soluble and/or water-insoluble polymer while said polymer is dissolved or dispersed in water, respectively.

4. Use of the powder according to claim 1 or 2 in a minerally binding material to reduce the shrinkage of the minerally binding materials, the mineral binding material being a building compound, a concrete and/or a mortar.

5. Dry mortar formulation, **characterised in that** the dry mortar formulation contains the powder according to claim 1 or 2.

6. Dry mortar formulation according to claim 5, **characterised in that** the dry mortar formulation contains said powder in an amount of from about 0.1 wt.% to 3.0 wt.%, based on the total weight of the final formulation in the dry and uncured form.

7. Process to manufacture a dry mortar formulation according to claim 5 or 6, **characterised in that** the powder according to claim 1 or 2 is dry-mixed with the other mortar ingredients.

8. Process in which a dry mortar formulation is mixed with water and the mixture is subsequently applied onto a substrate or cast in a mould and allowed to dry, **characterised in that** the dry mortar formulation is a mortar formulation according to claim 5 or 6.

**Patentansprüche**

1. Pulver, welches zur Minderung des Schwundes von mineralisch bindenden Materialien geeignet ist, **dadurch gekennzeichnet, dass** es umfasst:

a) ein Trägermaterial in pulvriger Form und das aus einem wasserlöslichen Polymer, einem wasserunlöslichen Polymer und einem inerten anorganischen Material ausgewählt ist, wobei das inerte anorganische Material aus der Gruppe bestehend aus Silikat, Siliciumdioxid, Silicastaub, pyrogener Kieselsäure, Carbonaten, Kaolin und/oder Kaolinit ausgewählt ist, und
b) mindestens etwa 5 Gewichtsprozent, basierend auf dem Gewicht des endgültigen Pulvers, einer Verbindung mit der Formel (1-a) und mindestens etwa 5 Gewichtsprozent, basierend auf dem Gewicht des endgültigen Pulvers, einer Verbindung mit der Formel (1-b)

$$HO\text{-}(R_2O)_m\text{-}H \qquad (1\text{-}a)$$

$$R_{1a}O\text{-}(R_{2a}O)_n\text{-}H \qquad (1\text{-}b)$$

wobei $R_{1a}$ eine lineare, verzweigte und/oder cyclische $C_1$- bis $C_6$-Alkylgruppe ist, $R_2$ eine lineare und/oder verzweigte $C_2$- bis $C_4$-Alkylengruppe ist, $R_{2a}$ eine lineare und/oder verzweigte $C_3$-Alkylengruppe ist, und m und n ganze Zahlen sind, die unabhängig voneinander einen Wert von 1 bis 4 haben.

2. Pulver gemäß Anspruch 1, **dadurch gekennzeichnet, dass** mindestens eine Verbindung mit der Formel (1-a) oder (1-b) aus der Gruppe bestehend aus Diethylenglycol, Triethylenglycol, Dipropylenglycol, Tripropylenglycol und ihren Monoethern ausgewählt ist.

3. Verfahren zur Herstellung eines Pulvers gemäß Anspruch 1 oder 2, **dadurch gekennzeichnet, dass**

a) entweder eine Mischung von Verbindungen (1-a) und (1-b) auf das Trägermaterial in der Form eines Pulvers adsorbiert wird,
b) oder, wenn das Trägermaterial ein wasserlösliches und/oder wasserunlösliches Polymer ist, die Mischung mit dem wasserlöslichen und/oder wasserunlöslichen Polymer gemischt wird, während das Polymer jeweils in Wasser gelöst oder dispergiert wird.

4. Verwendung des Pulvers gemäß Anspruch 1 oder 2 in einem mineralisch bindenden Material zur Verminderung des Schwundes des mineralisch bindenden Materials, wobei das mineralisch bindende Material ein Baumaterial, ein Zement und/oder ein Mörtel ist.

5. Trockene Mörtelzubereitung, **dadurch gekennzeichnet, dass** die trockene Mörtelzubereitung das Pulver gemäß Anspruch 1 oder 2 enthält.

6. Trockene Mörtelzubereitung gemäß Anspruch 5, **dadurch gekennzeichnet, dass** die trockene Mörtelzubereitung das Pulver in einer Menge von etwa 0,1 Gewichtsprozent bis 3,0 Gewichtsprozent enthält, basierend auf dem Gesamtgewicht der endgültigen Zubereitung in der trockenen und nicht gehärteten Form.

7. Verfahren zur Herstellung einer trockenen Mörtelzubereitung gemäß Anspruch 5 oder 6, **dadurch gekennzeichnet, dass** das Pulver gemäß Anspruch 1 oder 2 trocken mit den anderen Inhaltsstoffen des Mörtels gemischt wird.

8. Verfahren, in dem eine trockene Mörtelzubereitung mit Wasser gemischt wird und die Mischung anschließend auf ein Substrat aufgebracht wird oder in eine Form gefüllt und trocknen gelassen wird, **dadurch gekennzeichnet, dass** die trockene Mörtelzubereitung eine Mörtelzubereitung gemäß Anspruch 5 oder 6 ist.

## Revendications

1. Poudre qui est adaptée pour réduire le retrait de liants minéraux, **caractérisée en ce qu'**elle comprend

   a) un matériau de support sous forme pulvérulente et choisi dans le groupe consistant en un polymère soluble dans l'eau, un polymère insoluble dans l'eau et un matériau inorganique inerte, dans laquelle le matériau inorganique inerte est choisi dans le groupe consistant en le silicate, le dioxyde de silicium, la fumée de silice, la silice pyrogénée, les carbonates, le kaolin et/ou la terre à porcelaine, et
   b) au moins environ 5 % en poids, en se basant sur le poids de la poudre finale, d'un composé de formule (I-a) et au moins environ 5 % en poids, en se basant sur le poids de la poudre finale, d'un composé de formule (I-b),

   $$HO\text{-}(R_2O)_m\text{-}H \qquad (I\text{-}a)$$

   $$R_{1a}O\text{-}(R_{2a}O)_n\text{-}H \qquad (I\text{-}b)$$

   où $R^{1a}$ est un groupe alkyle en $C_1$ à $C_6$ linéaire, ramifié et/ou cyclique, $R_2$ est un groupe alkylène en $C_2$ à $C_4$ linéaire et/ou ramifié, $R_{2a}$ est un groupe alkylène en $C_3$ linéaire et/ou ramifié, et m et n sont des nombres entiers ayant indépendamment l'un de l'autre une valeur de 1 à 4.

2. Poudre selon la revendication 1, **caractérisée en ce qu'**au moins un composé de formule (I-a) ou (I-b) est choisi dans le groupe consistant en le diéthylène glycol, le triéthylène glycol, le dipropylène glycol, le tripropylène glycol et leurs monoéthers.

3. Procédé de fabrication d'une poudre selon la revendication 1 ou 2, **caractérisé en ce que**

   a) soit un mélange de composés (I-a) et (I-b) est adsorbé sur le matériau de support sous la forme d'une poudre,
   b) soit, lorsque le matériau de support est un polymère soluble dans l'eau et/ou insoluble dans l'eau, ledit mélange est mélangé avec ledit polymère soluble dans l'eau et/ou insoluble dans l'eau pendant que ledit polymère est dissous ou dispersé dans l'eau, respectivement.

4. Utilisation de la poudre selon la revendication 1 ou 2 dans un liant minéral pour réduire le retrait des liants minéraux, le liant minéral étant un composé de construction, un béton et/ou un mortier.

5. Formulation de mortier sec, **caractérisée en ce que** la formulation de mortier sec contient la poudre selon la revendication 1 ou 2.

6. Formulation de mortier sec selon la revendication 5, **caractérisée en ce que** la formulation de mortier sec contient ladite poudre dans une quantité d'environ 0,1 % en poids à 3,0 % en poids, en se basant sur le poids total de la formulation finale sous forme sèche et non durcie.

7. Procédé de fabrication d'une formulation de mortier sec selon la revendication 5 ou 6, **caractérisé en ce que** la poudre selon la revendication 1 ou 2 est mélangée à sec avec les autres ingrédients de mortier.

8. Procédé dans lequel une formulation de mortier sec est mélangée avec de l'eau et le mélange est ensuite appliqué sur un substrat ou coulé dans un moule et laissé sécher, **caractérisé en ce que** la formulation de mortier sec est une formulation de mortier sec selon la revendication 5 ou 6.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 308950 A1
- WO 9606058 A1
- US 5622558 A
- US 5571319 A
- WO 9627565 A1
- WO 9627563 A1
- EP 1024120 A1
- WO 2005063647 A1

- EP 573036 A1
- JP 4114942 A
- WO 2003022773 A1
- EP 675089 A2
- JP 2005126268 A
- JP 2007269608 A
- JP 2164754 A